# EUROPÄISCHE PATENTANMELDUNG

(11) **EP 4 764 075 A1**
(43) Veröffentlichungstag der Anmeldung: **24.06.2026**
(21) Anmeldenummer: 25216984.2
(22) Anmeldetag: 19.11.2025
(51) Int. Cl.: E01C 19/28, E01C 19/48, E01C 19/00, B60K 35/22

(54) **BODENVERDICHTUNGSSYSTEM ZUM VERDICHTEN VON ASPHALTMATERIAL UND VERFAHREN ZUM VERDICHTEN VON ASPHALTMATERIAL**

(30) Priorität: 23.12.2024 DE 102024139582
(71) Anmelder: Hamm AG, 95643 Tirschenreuth (DE)
(72) Erfinder: Gärtner, Patrick, Weiden (DE); Mühlhausen, Axel, Kassel (DE); Rücker, Daniel, Amberg (DE)
(74) Vertreter: Ruttensperger Lachnit Trossin Gomoll

(57) **Zusammenfassung**

Ein Bodenverdichtungssystem zum Verdichten von Asphaltmaterial umfasst wenigstens einen auf dem zu verdichtenden Asphaltmaterial (16) zu bewegenden Bodenverdichter (10), wenigstens eine Anzeigeeinheit (36) mit einem Anzeige-Display (38) zum Anzeigen von im Zusammenhang mit einem durchzuführenden Bodenverdichtungsvorgang stehender Verdichtungsbetriebsinformation, wobei die wenigstens eine Anzeigeeinheit (36) dazu ausgebildet ist, auf dem Anzeige-Display (38) wenigstens eine im Zusammenhang mit einer Bewegung des wenigstens einen Bodenverdichters (10) auf dem zu verdichtenden Asphaltmaterial (16) stehende Revisionsgrenze (50, 52) anzuzeigen, wobei die wenigstens eine Revisionsgrenze (50, 52) eine Grenze für die Bewegung des wenigstens einen Bodenverdichters (10) in einer Bewegungsrichtung (B₁, B₂) indiziert.

## Beschreibung

Die vorliegende Erfindung betrifft ein Bodenverdichtungssystem, mit welchem beispielsweise im Straßenbau Asphaltmaterial verdichtet werden kann.

Aus der EP 3 124 698 A1 ist ein Bodenverdichtungssystem bekannt, bei welchem an einem Asphaltfertiger auf einem Anzeige-Display Information angezeigt wird, welche einer Bedienperson eines hinter dem Asphaltfertiger das ausgebrachte Asphaltmaterial verdichtenden Bodenverdichters zeigt, wie nah der Bodenverdichter sich maximal an den Asphaltfertiger annähern soll bzw. maximal von diesem entfernt sein soll. Diese Information wird auf der Grundlage einer am Asphaltfertiger verfassten Temperatur des ausgebrachten Asphaltmaterials erzeugt. Bei einer alternativen Ausgestaltung werden Linien auf das Asphaltmaterial projiziert, welche der Bedienperson denjenigen Bereich indizieren, in welchem der Bodenverdichter sich auf dem ausgebrachten Asphaltmaterial bewegen soll. Auch diese Linien werden unter Berücksichtigung der an dem Asphaltfertiger erfassten Temperatur des ausgebrachten Asphaltmaterials erfasst.

Es ist die Aufgabe der vorliegenden Erfindung, ein Bodenverdichtungssystem zum verdichten von Asphaltmaterial sowie ein Verfahren zum Verdichten von Asphaltmaterial vermittels eines derartigen Bodenverdichtungssystems bereitzustellen, mit welchem einer Bedienperson eines Bodenverdichters die exakte Durchführung eines Verdichtungsbetriebs erleichtert wird.

Erfindungsgemäß wird diese Aufgabe gelöst durch ein Bodenverdichtungssystem zum Verdichten von Asphaltmaterial, umfassend:
- wenigstens einen auf dem zu verdichtenden Asphaltmaterial zu bewegenden Bodenverdichter,
- wenigstens eine Anzeigeeinheit mit einem Anzeige-Display zum Anzeigen von im Zusammenhang mit einem durchzuführenden Bodenverdichtungsvorgang stehender Verdichtungsbetriebsinformation,
wobei die wenigstens eine Anzeigeeinheit dazu ausgebildet ist, auf dem Anzeige-Display wenigstens eine im Zusammenhang mit einer Bewegung des wenigstens einen Bodenverdichters auf dem zu verdichtenden Asphaltmaterial stehende Revisionsgrenze anzuzeigen, wobei die wenigstens eine Revisionsgrenze eine Grenze für die Bewegung des wenigstens einen Bodenverdichters in einer Bewegungsrichtung indiziert.

Durch das Anzeigen wenigstens einer derartigen Reversionsgrenze wird einer Bedienperson eines Bodenverdichters unmittelbar und, ohne das zu verdichtende Asphaltmaterial oder/und einen vorausfahrenden Asphaltfertiger beobachten zu müssen, zur Anzeige gebracht, bis zu welcher Position der von dieser bediente Bodenverdichter bewegt werden kann, bevor die Bewegungsrichtung umgekehrt werden muss. Die Bedienperson muss daher selbst nicht die Position des Bodenverdichters beispielsweise in Bezug auf die Umgebung oder einen das Asphaltmaterial ausbringenden Asphaltfertiger abschätzen, so dass daraus resultierende Fehlerquellen bei der Durchführung eines Verdichtungsbetriebs eliminiert werden können.

Da beim Verdichten von Asphaltmaterial ein Bodenverdichter im Allgemeinen in zueinander im Wesentlichen entgegengesetzten Bewegungsrichtungen hin und her bewegt wird, ist es besonders vorteilhaft, wenn die wenigstens eine Anzeigeeinheit dazu ausgebildet ist, im Zusammenhang mit der Bewegung des wenigstens einen Bodenverdichters für jede von zwei zueinander im Wesentlichen entgegengesetzten Bewegungsrichtungen des wenigstens einen Bodenverdichters jeweils eine Revisionsgrenze anzuzeigen.

Um sicherzustellen, dass rechtzeitig vor Erreichen einer Revisionsgrenze Maßnahmen zum Abbremsen und Umkehren der Bewegungsrichtung des wenigstens einen Bodenverdichters eingeleitet werden können, kann die wenigstens eine Anzeigeeinheit dazu ausgebildet sein, in Zuordnung zu wenigstens einer, vorzugsweise jeder Revisionsgrenze einen Abstand des wenigstens einen Bodenverdichters zu der Revisionsgrenze anzuzeigen.

Da ein wesentlicher Einflussparameter dafür, ob das Asphaltmaterial bereits oder noch verdichtet werden kann, die Temperatur des Asphaltmaterial ist, ist es für die den wenigstens einen Bodenverdichter bedienende Bedienperson vorteilhaft, wenn die wenigstens eine Anzeigeeinheit dazu ausgebildet ist, in Zuordnung zu wenigstens einer, vorzugsweise jeder Revisionsgrenze eine Temperatur des Asphaltmaterials im Bereich der Revisionsgrenze anzuzeigen. Dies gestattet es der Bedienperson, abzuschätzen, ob eine vorgegebene bzw. auf dem Anzeige-Display angezeigte Revisionsgrenze gegebenenfalls unter Berücksichtigung weiterer der Bedienperson zur Anzeige gebrachter Information plausibel ist.

Um der Bedienperson die Einschätzung der momentanen Position des durch diese bedienten Bodenverdichters zu erleichtern, wird vorgeschlagen, dass die wenigstens eine Anzeigeeinheit dazu ausgebildet ist, in Zuordnung zu dem wenigstens einen Bodenverdichter von dem Bodenverdichter zu überfahrende oder/und überfahrene Überfahrtspuren anzuzeigen.

Zur Datenverarbeitung bzw. zum Erzeugen der der zur Anzeige zu bringenden Information zu Grunde liegenden Daten kann eine Informationsverarbeitungseinheit zum Erzeugen der Verdichtungsbetriebsinformation auf der Grundlage von eine Temperatur des zu verdichtenden Asphaltmaterials repräsentierender Asphalttemperaturinformation vorgesehen sein.

Von besonderem Vorteil für eine exakte Verdichtung des Asphaltmaterials ist, wenn die Informationsverarbeitungseinheit dazu ausgebildet ist, die Verdichtungsbetriebsinformation auf der Grundlage wenigstens eines die Temperatur des zu verdichtenden Asphaltmaterials beeinflussenden Temperatureinflussparameters zu erzeugen.

Der wenigstens eine Temperatureinflussparameter kann beispielsweise umfassen:
- eine Umgebungstemperatur,
   oder/und
- eine Luftfeuchtigkeit,
   oder/und
- eine Windgeschwindigkeit,
   oder/und
- einer Untergrundtemperatur,
   oder/und
- eine Niederschlagmenge oder/und Niederschlagart.

Da auch das zu verdichtende Asphaltmaterial selbst ein wesentlicher Einflussparameter für einen durchzuführenden Verdichtungsbetrieb ist, wird weiter vorgeschlagen, dass die Informationsverarbeitungseinheit dazu ausgebildet ist, die Verdichtungsbetriebsinformation auf der Grundlage wenigstens eines Materialparameters des zu verdichtenden Asphaltmaterials zu erzeugen.

Beispielsweise kann der wenigstens eine Materialparameter umfassen:
- eine Dicke des Asphaltmaterials vor der Verdichtung,
   oder/und
- eine Dicke des verdichteten Asphaltmaterials,
   oder/und
- einen Verdichtungszustand des Asphaltmaterials.

Auch die Ausgestaltung eines zum Verdichten genutzten Bodenverdichters beeinflusst die Charakteristik des durchgeführten bzw. durchzuführenden Bodenbearbeitungsbetriebs wesentlich. Aus diesem Grunde wird weiter vorgeschlagen, dass die Informationsverarbeitungseinheit dazu ausgebildet ist, die Verdichtungsbetriebsinformation auf der Grundlage wenigstens eines den wenigstens einen Bodenverdichter charakterisierenden Verdichterparameters zu erzeugen.

Beispielweise kann der wenigstens eine Verdichterparameter umfassen:
- eine Masse des wenigstens einen Bodenverdichters,
   oder/und
- eine Erstreckungslänge wenigstens einer Verdichterwalze des wenigstens einen Bodenverdichters in Richtung einer Walzendrehachse,
   oder/und
- eine Verdichtungsleistung des wenigstens einen Bodenverdichters.

Zum Ausbringen des durch den wenigstens einen Bodenverdichter zu verdichtenden Asphaltmaterials kann das erfindungsgemäße Bodenverdichtungssystem wenigstens einen Asphaltfertiger umfassen.

Um die für einen Verdichtungsbetrieb einen besonders wichtigen Parameter darstellende Temperatur des Asphaltmaterials repräsentierende Information erzeugen zu können, kann an dem wenigstens einen Asphaltfertiger eine Temperaturerfassungsanordnung zum Bereitstellen von die Temperatur des vermittels des wenigstens einen Asphaltfertigers ausgebrachten Asphaltmaterials repräsentierender Asphalttemperaturinformation vorgesehen sein.

Die Erfindung betrifft ferner ein Verfahren zum Verdichten von Asphaltmaterial vermittels eines erfindungsgemäß aufgebauten Bodenverdichtungssystems, bei welchem Verfahren auf dem Anzeige-Display der wenigstens einen Anzeigeeinheit wenigstens eine eine Grenze für eine Bewegung des wenigstens einen Bodenverdichters in einer Bewegungsrichtung repräsentierende Revisionsgrenze angezeigt wird.

Die vorliegende Erfindung wird nachfolgend mimt Bezug auf die beiliegenden Figuren detailliert beschrieben es zeigt:
- Fig. 1: eine Seitenansicht eines Bodenverdichters;
- Fig. 2: in prinzipartiger Darstellung ein einen Asphaltfertiger und einen Bodenverdichter umfassendes Bodenverdichtungssystem;
- Fig. 3: ein Anzeige-Display einer Anzeigeeinheit mit darauf angezeigter Verdichtungsbetriebsinformation.

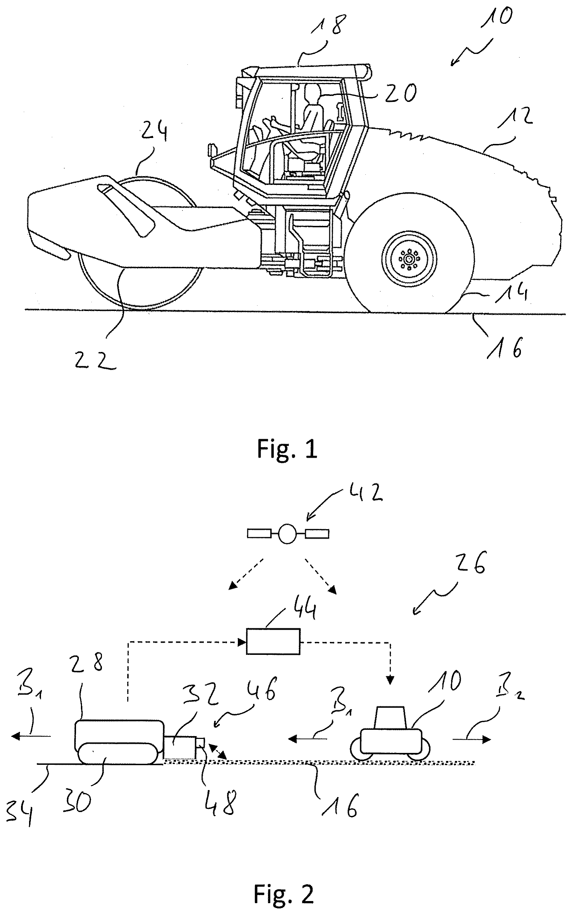

In Fig. 1 ist ein zum Verdichten von Bodenmaterial, insbesondere Asphaltmaterial, eingesetzter Bodenverdichter 10 in Seitenansicht zu erkennen. Der Bodenverdichter 10 umfasst einen Hinterwagen 12 mit daran vorgesehenen und durch ein Antriebsaggregat zur Drehung antreibbaren Antriebsrädern 14, um den Bodenverdichter 10 auf dem zu verdichtenden Asphaltmaterial 16 zu bewegen. An dem Hinterwagen 12 ist ferner ein Bedienstand 18 für eine den Bodenverdichter 10 bedienenden Bedienperson 20 vorgesehen.

Ein Vorderwagen 22 ist zum Lenken des Bodenverdichters 10 mit dem Hinterwagen 12 um eine Lenkachse schwenkbar verbunden. Am Vorderwagen 22 ist eine um eine zur Zeichenebene der Fig. 1 orthogonal stehende Walzendrehachse drehbare Verdichterwalze 24 vorgesehen.

Es ist darauf hinzuweisen, dass der Bodenverdichter 10 auch beispielsweise zwei Verdichterwalzen aufweisen kann und beispielsweise als schemelgelenkter Verdichter ausgebildet sein kann. Einer oder mehreren der Verdichterwalzen des Bodenverdichters 10 kann eine Schwingungserzeugungsanordnung zugeordnet sein, durch welche die Verdichterwalze entweder in eine Vibrationsbewegung, also eine Schwingungsbewegung im Wesentlichen orthogonal zur Walzendrehachse, beaufschlagt werden kann, oder zur Durchführung einer Oszillationsbewegung beaufschlagt werden kann, also einer Hin- und Herbewegung um die Walzendrehachse.

Die Fig. 2 veranschaulicht in prinzipartiger Weise ein Bodenverdichtungssystem 26, welches neben dem Bodenverdichter 10 einen Asphaltfertiger 28 umfasst, durch welchen das durch den Bodenverdichter 10 zu verdichtende Asphaltmaterial 16 ausgebracht wird. Der beispielsweise mit Raupenfahrwerken 30 ausgebildete Asphaltfertiger 28 umfasst eine bezüglich einer Bewegungsrichtung B1 des Asphaltfertigers 28 beim Ausbringen des Asphaltmaterials 16 in einen hinteren Bereich desselben positionierte Fertigerbohle 32, durch welche das Asphaltmaterial 16 auf einem vorbereiteten Untergrund 34 ausgebracht wird.

Im Verdichtungsbetrieb bewegt der Bodenverdichter 10 sich im Allgemeinen in der Bewegungsrichtung B₁ des Asphaltfertigers 28 und in einer dazu entgegengesetzten Bewegungsrichtung B₂ hin und her und überfährt somit das zu verdichtende Asphaltmaterial in mehreren beispielsweise durch einen Verdichtungsplan vorgegebenen Überfahrtspuren gegebenenfalls mehrfach.

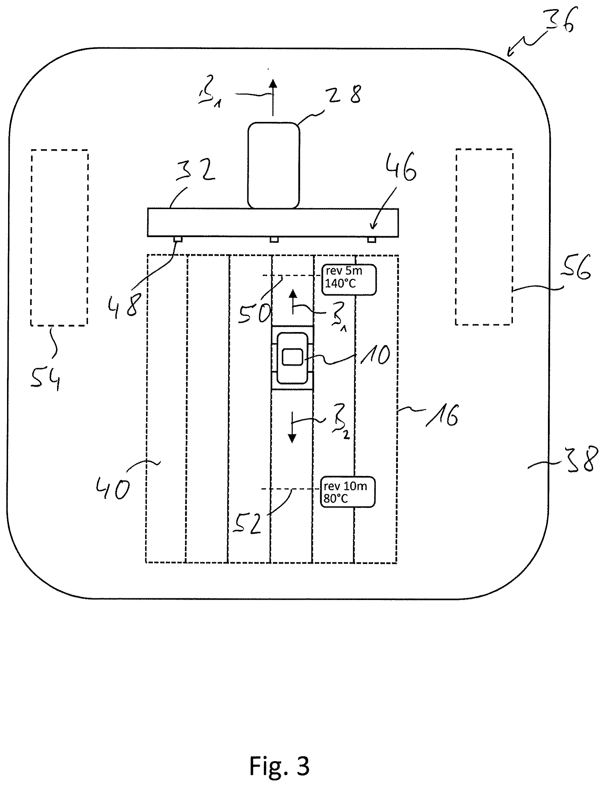

Um der Bedienperson 20 ein definiertes Bewegen des Bodenverdichters 10 auf dem zu verdichtenden Asphaltmaterial 16 zu ermöglichen, umfasst das Bodenverdichtungssystem 26 eine in Fig. 3 prinzipartig dargestellte Anzeigeeinheit 36 mit einem Anzeige-Display 38. Die Anzeigeeinheit 36 kann beispielsweise ein Smartphone, ein Tablet oder dergleichen umfassen, also im Wesentlichen mobil ausgestaltet sein und durch die Bedienperson 20 mitgeführt werden, oder kann im Bedienstand 18 fest installiert sein.

Vermittels der Anzeigeeinheit 36 wird auf dem Anzeige-Display 38 Verdichtungsbetriebsinformation dargestellt, welche der Bedienperson 20 indiziert, wo der Bodenverdichter 10 insbesondere auch in Bezug auf den Asphaltfertiger 28 positioniert ist und wie der Bodenverdichter 10 auf dem ausgebrachten Asphaltmaterial 26 bewegt werden soll.

Der Fig. 3 ist insbesondere zu entnehmen, dass die Verdichtungsbetriebsinformation die Überfahrtspuren 40 umfasst, auf welchen der Bodenverdichter 10 sich gemäß einem beispielsweise fest vorgegebenen Verdichtungsplan hinter dem in der Bewegungsrichtung B₁ sich bewegenden Asphaltfertiger 28 entweder in der gleichen Bewegungsrichtung B₁ oder der dazu entgegengesetzten Bewegungsrichtung B₂ bewegt werden soll.

Die Position des Asphaltfertigers 28 und des Bodenverdichters 10 können beispielsweise durch ein beispielsweise satellitengestütztes oder gegebenenfalls ein bodengestütztes Positionserfassungssystem 42 erfasst werden. Diese Information wird in einer beispielsweise am Asphaltfertiger 28 vorgesehenen, oder stationierten Informationsverarbeitungseinheit 44 derart verarbeitet, dass sie durch die Anzeigeeinheit 36 auf dem Anzeige-Display 38 dargestellt werden kann. Auch die Daten eines Verdichtungsplans, aus welchem der Verlauf der Überfahrtspuren hervorgeht, können in der Informationsverarbeitungseinheit 44 derart verarbeitet werden, dass die Überfahrtspuren 40 auf dem Anzeige-Display 38 angezeigt werden können.

An dem Asphaltfertiger 28 ist eine allgemein mit 46 bezeichnete Temperaturerfassungsanordnung vorgesehen. Die Temperaturerfassungsanordnung 46 kann eine Mehrzahl von an dem Asphaltfertiger 28, insbesondere der Fertigerbohle 32 desselben vorgesehenen Temperatursensoren 48 umfassen, die im Wesentlichen über die gesamte Breite der Fertigerbohle 32 die Temperatur über das vermittels der Fertigerbohle 32 ausgebrachte Asphaltmaterial 16 repräsentierende Asphalttemperaturinformation erzeugen und zur Informationsverarbeitungseinheit 44 leiten.

Die Temperatur des ausgebrachten Asphaltmaterials 16 ist ein wesentlicher Parameter dafür, ob das Asphaltmaterial 16 vermittels des Bodenverdichters 10 bereits oder noch verdichtet werden kann bzw. soll. Bei zu hoher bzw. zu niedriger Asphalttemperatur kann das Asphaltmaterial 16 nicht mit der gewünschten Qualität verdichtet werden. Es ist daher von Bedeutung, dass der Bodenverdichter 10 sich hinter dem Asphaltfertiger 28 nur in einem derartigen Bereich bewegt, in welchem gewährleistet ist, dass das allmählich abkühlende Asphaltmaterial 16 die für die Durchführung eines Verdichtungsvorgangs geeignete Temperatur aufweist.

Unter Berücksichtigung der Asphalttemperaturinformation erzeugt die Informationsverarbeitungseinheit auch in Zuordnung zur räumlichen Position des Bodenverdichters 10 Reversionsgrenzen 50, 52, die auf dem Anzeige-Display 38 in Zuordnung zum Bodenverdichter 10 angezeigt werden und indizieren, wie weit der Bodenverdichter 10 sich in der Bewegungsrichtung B₁ auf den Asphaltfertiger zu bzw. in der Bewegungsrichtung B₂ vom Asphaltfertiger 28 weg bewegen darf bzw. soll. Beispielsweise kann in Zuordnung zu diesen Reversionsgrenzen 50, 52 auf dem Anzeige-Display auch angezeigt werden, wie weit eine jeweilige Reversionsgrenze 50 bzw. 52 vom Bodenverdichter 10 momentan noch entfernt ist, so dass die Bedienperson 20 rechtzeitig einen Bremsvorgang einleiten kann und somit dafür Sorge tragen kann, dass bei bzw. kurz vor Erreichen einer jeweiligen Reversionsgrenze 50, 52 die Bewegungsrichtung des Bodenverdichters 10 umgekehrt wird und dieser gegebenenfalls entsprechend dem vorgegebenen Verdichtungsplan auf eine nachfolgend zu überfahrende Überfahrtspur 40 wechselt. Ferner kann in Zuordnung zu einer jeweiligen Reversionsgrenze 50, 52 angezeigt werden, welche Temperatur das Asphalt-Material an der jeweiligen Reversionsgrenze 50, 52 hat. Beispielsweise kann eine über die Breite des Asphaltfertigers 28 gemittelte Temperatur oder eine durch einen der momentan überfahrenen Überfahrtspur 40 am nächstliegend positionierten Temperatursensor 48 erfasste Temperatur angezeigt werden.

In Fig. 3 ist weiter zu erkennen, dass bei der näher am Asphaltfertiger 28 liegenden Reversionsgrenze 50 die Temperatur des Asphaltmaterials 16 im Bereich von etwa 140°C liegt, während bei der weiter vom Asphaltfertiger 28 entfernt liegenden Reversionsgrenze das Asphaltmaterial bereits auf 80°C abgekühlt ist. Da vermittels der Temperaturerfassungsanordnung 46 die Temperatur des Asphaltmaterials 16 unmittelbar hinter dem Asphaltfertiger 28, also in deutlicher räumlicher Entfernung zu den Reversionsgrenzen 50, 52, erfasst wird, kann vermittels der Informationsverarbeitungseinheit 44 beispielsweise auf der Grundlage eines das Abkühlverhalten des Asphaltmaterials 16 repräsentierenden Modells rechnerisch ermittelt werden, welche Temperatur das Asphaltmaterial 16 mit zunehmendem Abstand vom Asphaltfertiger 28 aufweist. Bei dieser Berechnung können verschiedene das Auskühlverhalten des Asphaltmaterials beeinflussende Temperatureinflussparameter, wie z. B. die Umgebungstemperatur, die Luftfeuchtigkeit, die Windgeschwindigkeit, die Temperatur des Untergrunds 34 oder auch eine Niederschlagmenge oder Niederschlagart, also Regen oder Schnee, berücksichtigt werden. Auf diese Art und Weise wird es möglich, vergleichsweise exakt die Temperatur an Orten zu bestimmen, die vom Asphaltfertiger 28 bereits vor einiger Zeit überfahren wurden.

Auch Materialparameter des ausgebrachten Asphaltmaterials 16 selbst beeinflussen das Auskühlverhalten des Asphaltmaterials 16 und können daher bei der Ermittlung der Reversionsgrenzen berücksichtigt werden. Beispielsweise können hierfür die Dicke des noch nicht verdichteten Asphaltmaterials, die Dicke des bereits verdichteten Asphaltmaterials bzw. der Verdichtungszustand des Asphaltmaterials berücksichtigt werden. Die Dicke des verdichteten Asphaltmaterials und dessen Verdichtungszustand können in an sich bekannter Weise aus den Verdichtungszustand charakterisierenden Betriebsgrößen des Bodenverdichters 10, wie zum Beispiel die Beschleunigung einer Verdichterwalze in vertikaler Richtung und in horizontaler Richtung und die Bewegungsgeschwindigkeit des Bodenverdichters 10, bestimmt werden.

Einen weiteren Einfluss darauf, welche Temperatur das vom Bodenverdichter 10 zu verdichtende Asphaltmaterial 16 maximal oder minimal haben soll, haben den Bodenverdichter 10 selbst charakterisierende Parameter. Beispielsweise kann dessen Masse, die Aufstandslänge, also die Erstreckungslänge einer oder mehrerer Verdichterwalzen des Bodenverdichters 10 in Richtung einer jeweiligen Walzendrehachse sowie auch dessen Verdichtungsleistung berücksichtigt werden. Die Verdichtungsleistung kann beispielsweise auf der Grundlage davon vermittelt werden, ob der Bodenverdichter 10 in Zuordnung zu einer oder mehreren Verdichterwalzen eine Schwingungserzeugungsanordnung aufweist, also ob im Vibrationsbetrieb oder/und im Oszillationsbetrieb verdichtet werden kann.

Die Fig. 3 veranschaulicht, dass auf dem Anzeige-Display 38 weitere nur prinzipartig dargestellte Informationen 54, 56 zur Anzeige gebracht werden können. Diese können beispielsweise Umgebungsparameter, wie z. B. die Umgebungstemperatur, die Luftfeuchtigkeit oder dergleichen umfassen, können aber auch die Bewegungsgeschwindigkeit des Bodenverdichters 10 und dessen momentane Betriebsart, also beispielsweise ob im Vibrationsbetrieb oder im Oszillationsbetrieb oder im statischen Betrieb verdichtet wird, umfassen. Auch kann zur Anzeige gebracht werden, ob bzw. auf welche der auf dem Anzeige-Display 38 auch angezeigten Überfahrtspuren 40 nach dem nächsten Richtungswechsel gewechselt werden soll. Ferner ist es möglich, den Verdichtungszustand des Asphaltmaterials charakterisierende Größen, wie z. B. dessen Dichte oder dergleichen, zur Anzeige zu bringen.

## Patentansprüche

1. Bodenverdichtungssystem zum Verdichten von Asphaltmaterial, umfassend:
- wenigstens einen auf dem zu verdichtenden Asphaltmaterial (16) zu bewegenden Bodenverdichter (10),
- wenigstens eine Anzeigeeinheit (36) mit einem Anzeige-Display (38) zum Anzeigen von im Zusammenhang mit einem durchzuführenden Bodenverdichtungsvorgang stehender Verdichtungsbetriebsinformation,
wobei die wenigstens eine Anzeigeeinheit (36) dazu ausgebildet ist, auf dem Anzeige-Display (38) wenigstens eine im Zusammenhang mit einer Bewegung des wenigstens einen Bodenverdichters (10) auf dem zu verdichtenden Asphaltmaterial (16) stehende Revisionsgrenze (50, 52) anzuzeigen, wobei die wenigstens eine Revisionsgrenze (50, 52) eine Grenze für die Bewegung des wenigstens einen Bodenverdichters (10) in einer Bewegungsrichtung (B₁, B₂) indiziert.

2. Bodenverdichtungssystem nach Anspruch 1,
**dadurch gekennzeichnet, dass** die wenigstens eine Anzeigeeinheit (36) dazu ausgebildet ist, im Zusammenhang mit der Bewegung des wenigstens einen Bodenverdichters (10) für jede von zwei zueinander im Wesentlichen entgegengesetzten Bewegungsrichtungen (B₁, B₂) des wenigstens einen Bodenverdichters (16) jeweils eine Revisionsgrenze (50, 52) anzuzeigen.

3. Bodenverdichtungssystem nach Anspruch 1 oder 2,
**dadurch gekennzeichnet, dass** die wenigstens eine Anzeigeeinheit (36) dazu ausgebildet ist, in Zuordnung zu wenigstens einer, vorzugsweise jeder Revisionsgrenze (50, 52) einen Abstand des wenigstens einen Bodenverdichters (10) zu der Revisionsgrenze (50, 52) anzuzeigen.

4. Bodenverdichtungssystem nach einem der Ansprüche 1-3,
**dadurch gekennzeichnet, dass** die wenigstens eine Anzeigeeinheit (36) dazu ausgebildet ist, in Zuordnung zu wenigstens einer, vorzugsweise jeder Revisionsgrenze (50, 52) eine Temperatur des Asphaltmaterials (16) im Bereich der Revisionsgrenze (50, 52) anzuzeigen.

5. Bodenverdichtungssystem nach einem der Ansprüche 1-4,
**dadurch gekennzeichnet, dass** die wenigstens eine Anzeigeeinheit (36) dazu ausgebildet ist, in Zuordnung zu dem wenigstens einen Bodenverdichter (10) von dem Bodenverdichter (10) zu überfahrende oder/und überfahrene Überfahrtspuren (40) anzuzeigen.

6. Bodenverdichtungssystem nach einem der Ansprüche 1-5,
**gekennzeichnet durch** eine Informationsverarbeitungseinheit (44) zum Erzeugen der Verdichtungsbetriebsinformation auf der Grundlage von eine Temperatur des zu verdichtenden Asphaltmaterials (16) repräsentierender Asphalttemperaturinformation.

7. Bodenverdichtungssystem nach Anspruch 6,
**dadurch gekennzeichnet, dass** die Informationsverarbeitungseinheit (44) dazu ausgebildet ist, die Verdichtungsbetriebsinformation auf der Grundlage wenigstens eines die Temperatur des zu verdichtenden Asphaltmaterials (16) beeinflussenden Temperatureinflussparameters zu erzeugen.

8. Bodenverdichtungssystem nach Anspruch 7,
**dadurch gekennzeichnet, dass** der wenigstens eine Temperatureinflussparameter umfasst:
- eine Umgebungstemperatur,
oder/und
- eine Luftfeuchtigkeit,
oder/und
- eine Windgeschwindigkeit,
oder/und
- einer Untergrundtemperatur,
oder/und
- eine Niederschlagmenge oder/und Niederschlagart.

9. Bodenverdichtungssystem nach einem der Ansprüche 6-8,
**dadurch gekennzeichnet, dass** die Informationsverarbeitungseinheit (44) dazu ausgebildet ist, die Verdichtungsbetriebsinformation auf der Grundlage wenigstens eines Materialparameters des zu verdichtenden Asphaltmaterials (16) zu erzeugen.

10. Bodenverdichtungssystem nach Anspruch 9,
**dadurch gekennzeichnet, dass** der wenigstens eine Materialparameter umfasst:
- eine Dicke des Asphaltmaterials vor der Verdichtung,
oder/und
- eine Dicke des verdichteten Asphaltmaterials,
oder/und
- einen Verdichtungszustand des Asphaltmaterials.

11. Bodenverdichtungssystem nach einem der Ansprüche 6-10,
**dadurch gekennzeichnet, dass** die Informationsverarbeitungseinheit (44) dazu ausgebildet ist, die Verdichtungsbetriebsinformation auf der Grundlage wenigstens eines den wenigstens einen Bodenverdichter (10) charakterisierenden Verdichterparameters zu erzeugen.

12. Bodenverdichtungssystem nach Anspruch 11,
**dadurch gekennzeichnet, dass** der wenigstens eine Verdichterparameter umfasst:
- eine Masse des wenigstens einen Bodenverdichters (10), oder/und
- eine Erstreckungslänge wenigstens einer Verdichterwalze (24) des wenigstens einen Bodenverdichters (10) in Richtung einer Walzendrehachse,
oder/und
- eine Verdichtungsleistung des wenigstens einen Bodenverdichters (10).

13. Bodenverdichtungssystem nach einem der Ansprüche 1-12,
**gekennzeichnet durch** wenigstens einen Asphaltfertiger (28) zum Ausbringen von durch den wenigstens einen Bodenverdichter (10) zu verdichtendem Asphaltmaterial (16).

14. Bodenverdichtungssystem nach Anspruch 13,
**dadurch gekennzeichnet, dass** an dem wenigstens einen Asphaltfertiger (28) eine Temperaturerfassungsanordnung (46) zum Bereitstellen von die Temperatur des vermittels des wenigstens einen Asphaltfertigers (28) ausgebrachten Asphaltmaterials (16) repräsentierender Asphalttemperaturinformation vorgesehen ist.

15. Verfahren zum Verdichten von Asphaltmaterial vermittels eines Bodenverdichtungssystems (26) nach einem der Ansprüche 1-14, bei welchem Verfahren auf dem Anzeige-Display (38) der wenigstens einen Anzeigeeinheit (36) wenigstens eine eine Grenze für eine Bewegung des wenigstens einen Bodenverdichters (10) in einer Bewegungsrichtung (B₁, B₂) repräsentierende Revisionsgrenze (50, 52) angezeigt wird.
